# EUROPÄISCHE PATENTSCHRIFT

(11) **EP 0 849 566 B1**
(45) Veröffentlichungstag und Bekanntmachung des Hinweises auf die Patenterteilung: **26.03.2003**
(21) Anmeldenummer: 97121723.7
(22) Anmeldetag: 10.12.1997
(51) Int. Cl.: G01D 5/16, G01D 5/14

(54) **Positionsmesseinrichtung**
Position measuring device
Capteur de position

(30) Priorität: 17.12.1996 DE 19652562
(43) Veröffentlichungstag der Anmeldung: 24.06.1998
(73) Patentinhaber: Dr. Johannes Heidenhain GmbH, 83292 Traunreut (DE)
(72) Erfinder: Spies, Alfons, Dipl.-Ing., 83358 Seebruck (DE)

(56) Entgegenhaltungen:
- EP-A- 0 106 951
- EP-A- 0 541 829
- FR-A- 2 522 807
- US-A- 5 545 985
- KIKUCHI Y ET AL: "CONSIDERATION FOR A HIGH RESOLTUION OF MAGNETIC ROTARY ENCODER" IEEE TRANSACTIONS ON MAGNETICS, Bd. 32, Nr. 5, September 1996, Seiten 4959-4961, XP000634187
- PETERSEN: "magnetoresistive sensoren in Kfz" ELEKTRONIK, Bd. 34, Nr. 10, Mai 1985, MUNCHEN, Seiten 99-102, XP002059523

## Beschreibung

Die vorliegende Erfindung betrifft eine Positionsmeßeinrichtung, über die positionsabhängige Ausgangssignale bei der Abtastung einer Maßstabteilung mit Hilfe ein oder mehrerer Abtastelemente erzeugbar sind.

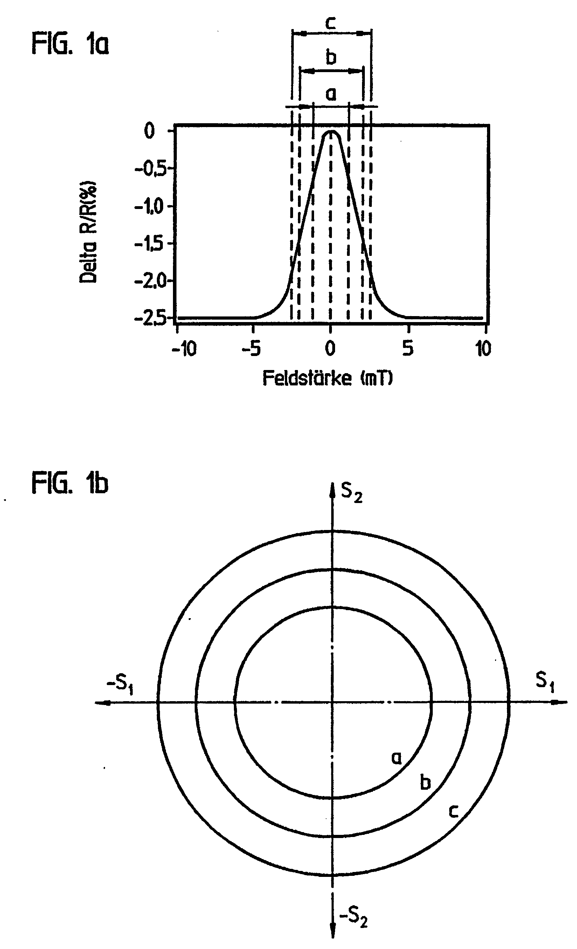

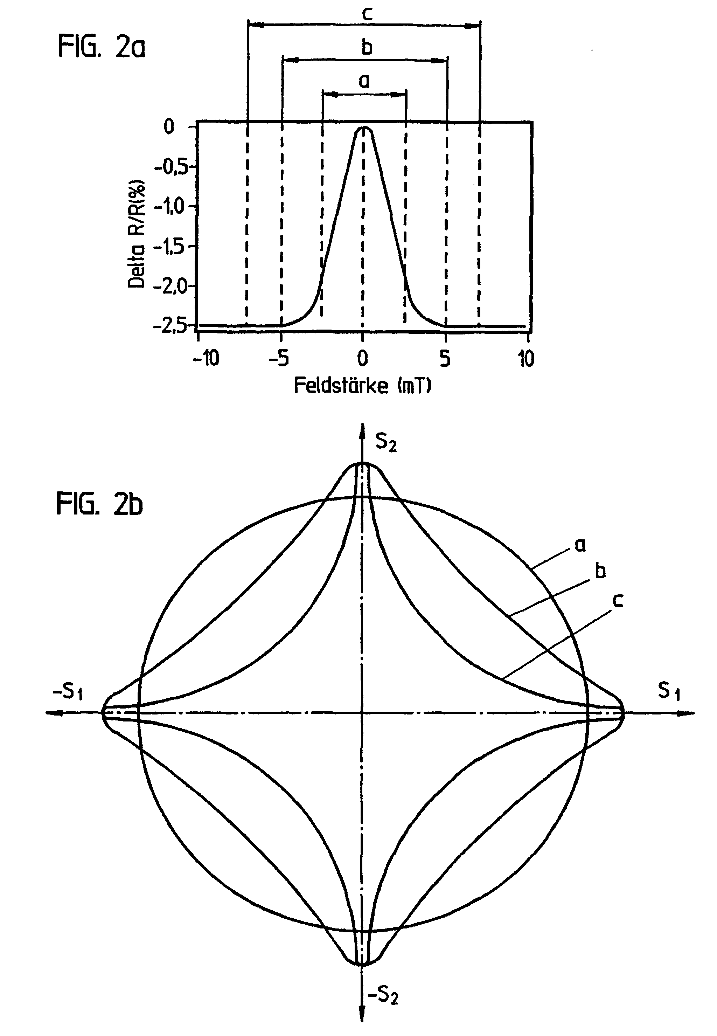

Die anschließende Erläuterung der der vorliegenden Erfindung zugrundeliegenden Problematik erfolgt am Beispiel einer magnetischen Positionsmeßeinrichtung. Grundsätzlich ergeben sich jedoch ähnliche Probleme bei Positionsmeßeinrichtungen, die auf anderen physikalischen Abtastprinzipien beruhen, beispielsweise bei optischen, induktiven oder kapazitiven Positionsmeßeinrichtungen.
Im Fall einer magnetischen Positionsmeßeinrichtung werden zur Abtastung einer magnetischen Maßstabteilung verschiedenste magnetfeldempfindliche Abtastelemente eingesetzt. Beispielsweise eignen sich hierzu magnetoresistive Elemente ebenso wie Hall-Elemente. Mit Hilfe dieser Elemente wird im Fall eines inkrementalen Meßsystems eine periodische Magnetisierung einer Maßstabteilung abgetastet, die relativ zu den jeweiligen Elementen beweglich angeordnet ist. Die periodische Magnetisierung besteht dabei z.B. aus alternierend angeordneten magnetischen Nord- und Südpolen. Ausgangsseitig liefern die Abtastelemente bei der Relativbewegung von Maßstabteilung und Abtastelement periodisch modulierte Signale, die in bekannter Art und Weise weiterverarbeitet werden können. In inkrementalen Meßsystemen wird in der Regel mindestens ein Paar phasenversetzter Ausgangssignale S₁, S₂ erzeugt, wobei der Phasenversatz 90° beträgt. Hinsichtlich der Ausgangssignale S₁, S₂ ergeben sich nunmehr eine Reihe von Anforderungen, wenn diese in bekannten Folgeelektroniken oder Auswerteeinheiten weiterverarbeitet werden sollen. So setzt die Folgeelektronik in der Regel möglichst sinusförmige Ausgangssignale voraus, da nur auf Grundlage der idealen Sinusform eine zuverlässige weitere Unterteilung der Signale bzw. eine Interpolation derselben möglich ist. Ferner sollen die beiden, um 90° phasenversetzten Signale S₁, S₂ innerhalb einer Signalperiode jeweils möglichst gleiche Amplituden aufweisen. Im Fall der Darstellung des Signalverlaufes mit Hilfe einer Lissajous-Figur bedeutet dies, daß als Lissajous-Figur möglichst ein Kreis resultieren sollte. Als weitere Anforderung an die Signalqualität ist aufzuführen, daß die Maximalamplituden der gelieferten Ausgangssignale S₁, S₂ möglichst geringen Schwankungen unterliegen sollten, auch wenn beispielsweise der Abtastabstand zwischen der magnetischen Maßstabteilung und dem verwendeten Abtastelement variiert. Resultierende Probleme hinsichtlich der Signalqualität bei bekannten magnetischen Meßsystemen seien nachfolgend anhand der Figuren 1a,1b, 2a und 2b erläutert. Figur 1a zeigt die Arbeitskennlinie eines magnetfeldempfindlichen Abtastelements, beispielsweise eines magnetoresistiven Elementes, bestehend aus einem mittleren parabolischen Bereich und einem Sättigungsbereich, der benachbart an den parabolischen Bereich angrenzt. Aufgetragen ist hierbei die relative Widerstandsänderung gegenüber der detektierten Feldstärke, d.h. als Eingangssignal des Abtastelementes dient die zu detektierende Feldstärke, als Ausgangssignal ergibt sich eine bestimmte relative Widerstandsänderung. In die Darstellung sind ferner drei Aussteuerbereiche bzw. Arbeitsbereiche a, b und c der Arbeitskennlinie eingezeichnet, die miteinander verglichen werden sollen. Diese Aussteuerbereiche a, b und c entsprechen unterschiedlichen magnetischen Maximal-Feldstärken bzw. Eingangssignalen, zwischen denen das Abtastelement betrieben wird, d.h. die verschiedenen Aussteuerbereiche a, b und c stellen unterschiedliche Abtastabstände zwischen dem Abtastelement und der magnetischen Maßstabteilung dar. Der Bereich a mit den geringsten Maximal-Feldstärken repräsentiert den größten Abtastabstand, während der Bereich c den geringsten Abtastabstand darstellt. Alle gewählten Aussteuerbereiche liegen in diesem Fall im parabolischen Teil der Arbeitskennlinie des Abtastelementes bzw. mehrerer derartiger Abtastelemente.
In Figur 1b ist die resultierende Lissajous-Darstellung gezeigt, die sich für zwei um 90° phasenversetzte, sinus- und cosinusförmige Signale S₁, S₂ in den verschiedenen Abstandsbereichen a, b und c im parabolischen Teil der Arbeitskennlinie ergibt. Hierbei ist zum einen deutlich erkennbar, daß im parabolischen Bereich der Arbeitskennlinie gewährleistet ist, daß sich kreisförmige Lissajous-Figuren ergeben. Die Signal-Amplituden der beiden phasenversetzten Signale S₁, S₂ sind demzufolge jeweils gleich. Zum anderen wird anhand der Darstellung in Figur 1b deutlich, daß sich die maximalen Signalamplituden in den Abstandsbereichen a und c nahezu um einen Faktor 2 unterscheiden, d.h. der Radius der beiden Kreise differiert nahezu um den Faktor 2. Eine derartig große Schwankung der Signalamplituden bei variierendem Abtastabstand verursacht jedoch Probleme bei der Signal-Weiterverarbeitung in der Folgeelektronik. Aufgrund der extremen Abstandsabhängigkeit der Feldstärken der abgetasteten Maßstabteilung vom Abtastabstand resultiert demnach eine erhebliche Beeinträchtigung der Signalqualität.

Ein weiteres Problem bei bekannten magnetischen Meßsystemen sei anhand der beiden Figuren 2a und 2b erläutert. Hierbei wird wiederum von der gleichen Arbeitskennlinie eines magnetfeldempfindlichen Abtastelements ausgegangen wie im vorhergehenden Beispiel. Das Abtastelement wird nunmehr jedoch in drei Aussteuerbereichen a, b und c der Arbeitskennlinie betrieben, die nicht mehr allesamt im Bereich des parabolischen Teils der Arbeitskennlinie liegen, sondern bereits teilweise im Sättigungsbereich derselben. Die maximalen Eingangssignale bzw. Maximal-Feldstärken liegen demzufolge jeweils im Sättigungsbereich der Arbeitskennlinie. Hierbei sei unter dem Sättigungsbereich derjenige Bereich der Arbeitskennlinie des Abtastelementes verstanden, in dem sich auch bei einer Änderung der detektierten Magnetfeldstärke keine wesentlichen Änderungen in der Amplitude der Ausgangssignale mehr ergeben bzw. die aufgetragene relative Widerstandsänderung annähernd konstant bleibt. Wiederum stellt der Bereich a den größten Abtastabstand dar, während der Bereich c den geringsten Abtastabstand mit den höchsten detektierten Maximal-Feldstärken repräsentiert.
Wie aus der zugehörigen Figur 2b mit der Lissajous-Darstellung der phasenversetzten Ausgangssignale S₁, S₂ deutlich erkennbar ist, ergibt sich im Bereich a mit dem größten Abtastabstand noch eine kreisförmige Lissajous-Figur, d.h. es resultieren gleiche Signalamplituden der beiden phasenversetzten Ausgangssignale. Je kleiner der Abtastabstand jedoch gewählt wird, d.h. je mehr das Abtastelement im Sättigungsbereich ausgesteuert wird, desto größer wird die Abweichung der Lissajous-Figur von der idealen Kreisform. Dies ist insbesondere im Bereich c der Fall, wo eine deutliche Verzerrung der ehemals kreisförmigen Lissajous-Figur vorliegt.
Auch eine derartige Abhängigkeit der Form der Lissajous-Figur vom Abtastabstand verursacht unerwünschte Fehler bei der Weiterverarbeitung der Signale in der Folgeelektronik, etwa bei der Signal-Interpolation.

Aus der Veröffentlichung "Consideration for a High Resolution of Magnetic Rotary Encoder", Y. Kikuchi et al., IEEE Transactions on Magnetics, Bd. 32, Nr. 5, September 1996, S. 4959 - 4961 ist eine magnetische Positionsmesseinrichtung bekannt, in welcher magnetoresistive Abtastelemente eingesetzt werden. Die magnetoresistiven Abtastelemente besitzen eine parabolische Arbeitskennlinie, wie oben anhand von Fig. 1a erläutert. Die vorgeschlagene Positionsmesseinrichtung wird wie ebenfalls bereits oben erläutert im linearen Bereich der parabolischen Arbeitskennlinie betrieben, der wiederum zwei aneinander anschließende lineare Bereiche der Arbeitskennlinie mit entgegengesetzter Steigung umfasst. Es resultieren demzufolge die gleichen Probleme, wie bereits anhand der Figuren 1a und 1b erläutert wurde.

Aus der EP 0 541 829 A1 sind diverse Ansätze zur Filterung von unerwünschten Oberwellenanteilen, insbesondere in magnetischen Positionsmesseinrichtungen bekannt. Hierzu werden diverse Maßnahmen auf Seiten der eingesetzten Abtastelemente vorgeschlagen. Eine Vermeidung der oben erwähnten Probleme lässt sich allein durch die in dieser Druckschrift angegebenen Maßnahmen zur Oberwellenfilterung nicht sicherstellen.

Die Druckschrift EP 0 106 951 A1 offenbart desweiteren einen Ansatz zur elektronischen Filterung bzw. Beseitigung unerwünschter Oberwellenanteile an den Abtastsignalen inkrementaler Positionsmesseinrichtungen. Ähnlich wie im Fall der vorher diskutierten Druckschrift lassen sich allein durch die vorgeschlagenen Maßnahmen zur Oberwellenfilterung die eingangs diskutierten Probleme in Verbindung mit magnetischen Positionsmesseinrichtungen nicht beheben.

Wie bereits oben angedeutet ergeben sich ähnliche Probleme auch bei Positionsmeßeinrichtungen, die auf anderen physikalischen Abtastprinzipien beruhen.

Aufgabe der vorliegenden Erfindung ist es daher, eine Positionsmeßeinrichtung zu schaffen, die auch bei relativ großen Toleranzen hinsichtlich des Abtastabstands möglichst unverzerrte Ausgangssignale liefert. Ferner sind weitgehend konstante Maximalamplituden der Ausgangssignale auch bei schwankenden Abtastabständen gefordert.

Diese Aufgabe wird durch eine Positionsmeßeinrichtung mit den Merkmalen des Anspruchs 1 bzw. des Anspruchs 10 gelöst.

Vorteilhafte Ausführungsformen der erfindungsgemäßen Positionsmeßeinrichtung ergeben sich aus den Maßnahmen in den abhängigen Ansprüchen.

Erfindungsgemäß wird nunmehr gemäß Anspruch 1 vorgesehen, ein Abtastelement über den gesamten Meßbereich gezielt im Sättigungsbereich seiner Arbeitskennlinie auszusteuern, d.h. zwischen maximalen Eingangssignalen, welche jeweils in den Sättigungsbereichen der Arbeitskennlinie liegen. Dies läßt sich durch eine geeignete Wahl des Abtastabstandes erreichen, d.h. wenn dieser gering genug gewählt wird und gewährleistet ist, daß dieser Abtastabstand über den gesamten Meßbereich eingehalten wird, so bewirken die hohen Amplituden der detektierten Eingangssignale stets die Aussteuerung des Abtastelementes bis zum Sättigungsbereich der Arbeitskennlinie. Dadurch ist sichergestellt, daß sich keine großen Änderungen der Maximalamplitude im Fall eines ggf. variierenden Abtastabstandes ergeben. Um die in diesem Aussteuer-Bereich der Arbeitskennlinie üblicherweise auftretenden Verzerrungen der Ausgangssignale zu eliminieren, ist erfindungsgemäß desweiteren vorgesehen, eine Signalfilterung vorzunehmen, um insbesondere die dritte Oberwelle aus dem Ausgangssignal des mindestens einen Abtastelementes zu beseitigen. Zur Filterung von unerwünschten Oberwellenanteilen können dabei eine Reihe von Möglichkeiten eingesetzt werden, die allesamt dem einschlägigen Fachmann bekannt sind. Selbstverständlich kann zur weiteren Signal-Optimierung auch eine Filterung weiterer Oberwellenanteile erfolgen, beispielsweise der fünften, siebten,... Oberwelle. Neben Maßnahmen auf Seiten der Abtasteinheit bzw. der Abtastelemente kann eine derartige Filterung grundsätzlich auch auf elektronischem Weg erfolgen.

Die resultierenden Ausgangssignale einer erfindungsgemäß aufgebauten bzw. erfindungsgemäß betriebenen Positionsmeßeinrichtung weisen die geforderte Amplitudenkonstanz bei variierendem Abtastabstand ebenso auf wie einen weitgehend unverzerrten Signalverlauf. Die Signal-Weiterverarbeitung in bekannten Folgeelektroniken bzw. Auswerteeinheiten kann auf Grundlage der optimierten Signalqualität erfolgen. Insgesamt resultiert eine verbesserte Meßgenauigkeit.

Alternativ zur Ausführungsvariante gemäß Anspruch 1 ist es auch möglich, gemäß Anspruch 10 Abtastelemente mit einer weitgehend linearen Ausgangscharakteristik einzusetzen und über geeignete Bauelemente der nachgeordneten Folgeelektronik einen Sättigungsbereich der Arbeitskennlinie künstlich zu erzeugen. Im Meßbetrieb wird bis in den Sättigungsbereich ausgesteuert; eine Signalfilterung ist auf elektronischem Wege vorgesehen. Die erfindungsgemäßen Überlegungen lassen sich demzufolge in Verbindung mit verschiedensten Abtastelementen einsetzen, d.h. insbesondere auch in Verbindung mit Abtastelementen, die eine lineare Ausgangscharakteristik über einen relativ großen Aussteuerungsbereich aufweisen.

Selbstverständlich kann die erfindungsgemäße magnetische Positionsmeßeinrichtung sowohl als lineares Meßsystem wie auch als rotatorisches Meßsystem ausgebildet werden. Daneben ergeben sich auch Ausführungsmöglichkeiten mit mehreren benachbarten Teilungsspuren unterschiedlicher Teilungsperiode etc.. Es existieren demzufolge vielfältige Ausgestaltungsmöglichkeiten im Rahmen der erfindungsgemäßen Überlegungen, insbesondere lassen sich die erfindungsgemäßen Überlegungen auch bei verschiedensten physikalischen Abtastprinzipien einsetzen.

Weitere Vorteile sowie Einzelheiten der erfindungsgemäßen Positionsmeßeinrichtung ergeben sich aus der nachfolgenden Beschreibung von Ausbildungsbeispielen anhand der beiliegenden Figuren.

Dabei zeigt
- Figur 3: ein Blockschaltbild einer ersten Ausführungsform der erfindungsgemäßen Positionsmeßeinrichtung, ausgebildet als magnetische Positionsmeßeinrichtung;
- Figur 4a: die Kennlinie eines ersten Abtastelements, das in der erfindungsgemäßen Positionsmeßeinrichtung eingesetzt werden kann;
- Figur 4b: die Kennlinie eines zweiten Abtastelements, das in der erfindungsgemäßen Positionsmeßeinrichtung eingesetzt werden kann;
- Figur 5: die resultierende Signalform in der erfindungsmäßen Positionsmeßeinrichtung in einer Lissajous-Darstellung;
- Figur 6a - 6c: je eine Ansicht einer Abtasteinheit einer magnetischen Positionsmeßeinrichtung mit mehreren Abtastelementen in der Detektorebene, die zur Filterung bestimmter Oberwellenanteile geeignet ist;
- Figur 7a: einen Teil einer weiteren Ausführungsform der erfindungsgemäßen Positionsmeßeinrichtung in einer schematisierten Darstellung;
- Figur 7b: die Arbeitskennnlinie der Anordnung aus Figur 7a.

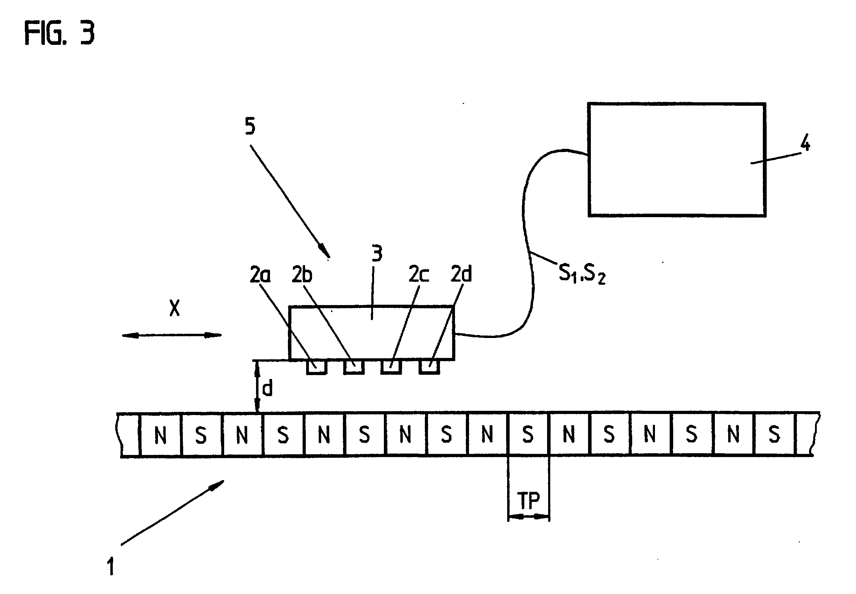

Ein schematisiertes Blockschaltbild einer ersten Ausführungsform der erfindungsgemäßen Positionsmeßeinrichtung ist in Figur 3 dargestellt. Die erfindungsgemäßen Überlegungen werden dabei in den folgenden Figuren am Beispiel von magnetischen Positionsmeßeinrichtungen erläutert. Wie bereits mehrfach angedeutet, lassen sich diese Überlegungen jedoch auch auf andere physikalische Abtastprinzipien bzw. Positionsmeßeinrichtungen übertragen, um derart die gewünschte Qualität der Ausgangssignale sicherzustellen.

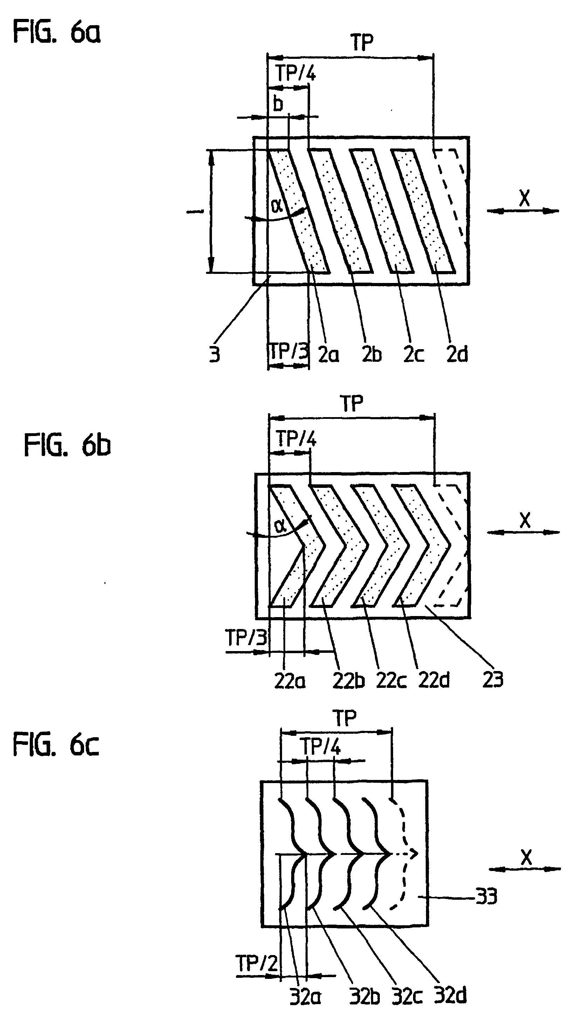

Im Ausführungsbeispiel der Figur 3 wird eine magnetische Maßstabteilung 1 mit Hilfe mehrerer Abtastelemente 2a - 2d abgetastet, die auf einem geeigneten Trägerkörper 3 in einer Abtasteinheit 5 angeordnet sind. Die Abtastelemente 2a - 2d befinden sich im Meßbetrieb in einem Abtastabstand d über der magnetischen Maßstabteilung 1. Im dargestellten Ausführungsbeispiel ist die abgetastete magnetische Maßstabteilung als alternierende Folge von magnetischen Nord- und Südpolen ausgebildet, die magnetische Positionsmeßeinrichtung arbeitet als inkrementales Meßsystem. Als Teilungsperiode TP sei entsprechend der Figur 3 die Länge eines Magnetpoles N oder S definiert. Die Abtasteinheit 5 sowie die magnetische Maßstabteilung 1 sind in x-Richtung relativ zueinander verschiebbar angeordnet und beispielsweise mit dem Werkzeug sowie mit dem Werkstück einer Werkzeugmaschine verbunden, deren Relativposition zueinander hochgenau bestimmt werden soll. Als Abtastelemente 2a - 2d dienen in der dargestellten ersten Ausführungsform mehrere magnetoresistive Elemente, die streifenförmig in äquidistanten Abständen senkrecht zur Meßrichtung x auf dem Trägerkörper 3 angeordnet sind. Hinsichtlich der konkreten Anordnung der magnetoresistiven Elemente auf dem Trägerkörper 3 in der Detektorebene sei auf die nachfolgende Beschreibung der Figur 6 verwiesen. Die über die Abtastelemente 2a - 2d während einer Relatiwerschiebung von Maßstabteilung 1 und Abtasteinheit 5 erzeugten, periodisch modulierten Ausgangssignale S₁, S₂ werden von einer Auswerteeinheit 4 bzw. Folgeelektronik in bekannter Art und Weise weiterverarbeitet. Im Fall des dargestellten Ausführungsbeispieles werden bei der Abtastung der als Inkrementalteilung ausgebildeten Maßstabteilung 1 mit Hilfe der geeignet verschalteten Abtastelemente 2a - 2d zwei um 90° phasenversetzte, sinus- bzw. cosinusförmige Ausgangssignale S₁, S₂ erzeugt, so daß neben der Positionsbestimmung auch eine Richtungsdetektion möglich ist.

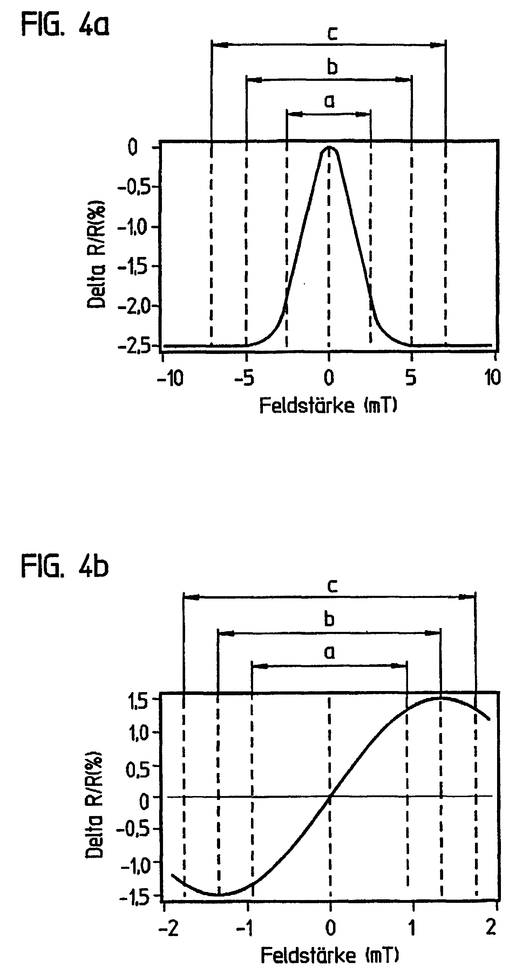

Um die gewünschte Signalqualität der an die Auswerteeinheit 4 übergebenen Ausgangssignale S₁, S₂ sicherzustellen, sind nunmehr eine Reihe von Maßnahmen auf Seiten der erfindungsgemäßen Positionsmeßeinrichtung vorgesehen.
So werden in der dargestellten Ausführungsform zum einen Abtastelemente 2a - 2d gewählt, deren Arbeitskennlinien ab bestimmten, detektierten Magnet-Feldstärken einen Sättigungsbereich aufweisen, der sich jeweils beidseitig benachbart an einen zumindest annähernd linearen Arbeitsbereich des Abtastelementes anschließt. Dies bedeutet in allgemeiner Form, daß ab einer bestimmten Größe des detektierten Eingangssignales ein Ausgangssignal des Abtastelementes in einem Sättigungsbereich resultiert, in dem sich auch bei einer Änderung des Eingangssignales kein wesentlich verändertes Ausgangssignal ergibt.
Die Kennlinie eines geeignet ausgebildeten magnetfeldempfindlichen Abtastelementes ist in Figur 4a dargestellt, wobei es sich hierbei um eine sog. parabolische Kennlinie handelt. Unter dem Sättigungsbereich der Arbeitskennlinie wird in dieser Ausführungsform ein Bereich verstanden, in dem trotz einer Variation der erfaßten Magnetfeldstärken keine signifikante Änderung der Amplitude der Ausgangssignale mehr resultiert. Im Beispiel der Figur 4a liegt ein solcher Sättigungsbereich etwa ab einem Wert der MagnetFeldstärken von +/- 5 mT vor.
Derart ausgebildete Abtastelemente 2a - 2d werden nunmehr erfindungsgemäß so betrieben, daß über den gesamten Meßbereich, d.h. über die gesamte Länge der abgetasteten magnetischen Maßstabteilung 1 eine Aussteuerung bis zum Sättigungsbereich der Arbeitskennlinie erfolgt. Es erfolgt demzufolge eine Aussteuerung des Abtastelementes zwischen maximalen Eingangssignalen, die jeweils in den Sättigungsbereichen der Arbeitskennlinie liegen. Dies läßt sich dadurch erreichen, daß der Abtastabstand d zwischen den Abtastelementen 2a - 2d und der magnetischen Maßstabteilung 1 derart gering gewählt wird, daß die Abtastelemente 2a-2d immer zwischen maximalen Feldstärken bzw. Eingangssignalen ausgesteuert werden, die im Sättigungsbereich liegen, d.h. größer als etwa +/- 5mT sind. Ein derart geringer, erforderlicher Abtastabstand d läßt sich durch geeignete konstruktive Maßnahmen innerhalb der erfindungsgemäßen Positionsmeßeinrichtung einfach bewerkstelligen, indem beispielsweise vorgesehen wird, die Abtasteinheit über die Maßstabteilung gleiten zu lassen.

In Figur 4b ist die Arbeitskennlinie eines weiteren, geeigneten Abtastelementes dargestellt, das ebenfalls innerhalb der erfindungsgemäßen Positionsmeßeinrichtung eingesetzt werden kann. Auch diese Arbeitskennlinie weist im Fall höherer, detektierter Magnetfeldstärken einen Sättigungsbereich auf, in dem bei einer Änderung der einwirkenden Magnet-Feldstärke keine wesentlichen Änderungen in der Amplitude der Ausgangssignale mehr resultieren. Auch hierbei schließt sich an einen zumindest teilweise, annähernd lienearen Arbeitsbereich beidseitig benachbart ein Sättigungsbereich der Arbeitskennlinie an. Derartige Arbeitskennlinien haben etwa magnetoresistive Elemente, bei denen bestimmte Maßnahmen zur Linearisierung der Ausgangscharakteristik getroffen werden. Dies läßt sich beispielsweise in bekannter Art und Weise über ein Vorspann-Magnetfeld erreichen, das z.B. über einen Permanent-Magneten in der Nähe der magnetoresistiven Elemente erzeugt wird. Entscheidend ist hinsichtlich der Arbeitskennlinie wiederum, daß im Bereich höherer Magnetfeldstärken der Eingangssignale keine große Änderungen in den Amplituden der Ausgangssignale resultieren bzw. diese sich auch bei einer Variation der Magnetfeldstärken nicht ändern.

Neben dem Aussteuern der verwendeten Abtastelemente bis zum Bereich der Sättigung der jeweiligen Arbeitskennlinie ist desweiteren erfindungsgemäß vorgesehen, ein Filterung der Ausgangssignale S₁, S₂ vorzunehmen.

Hierbei wird eine Filterung dergestalt vorgesehen, daß mindestens die dritte Oberwelle aus den Ausgangssignalen S₁, S₂ eliminiert wird. Über eine derartige Filterung lassen sich die bereits in der Beschreibungseinleitung erwähnten, unerwünschten Signalverzerrungen bei geringen Abtastabständen d weitgehend vermeiden bzw. zumindest minimieren.
Hinsichtlich geeigneter Filterungsmaßnahmen in der erfindungsgemäßen Positionsmeßeinrichtung sei in diesem Zusammenhang beispielsweise auf die EP 0 541 829 der Anmelderin verwiesen. Dort werden eine Reihe von Möglichkeiten vorgeschlagen, wie im Fall magnetoresistiver Abtastelemente eine Filterung der Ausgangssignale S₁, S₂ erreicht werden kann und zumindest die dritte Oberwelle aus den Ausgangssignalen eliminiert werden kann. Mögliche Filterungsvarianten sehen hierzu etwa die schräge Anordnung der streifenförmigen magnetoresistiven Elemente gegenüber der Meßrichtung oder aber eine Variation der Länge derartiger Elemente gemäß einer Sinusoder Cosinus-Funktion vor. Geeignete Filterungsanordnungen, die sich zur Filterung der dritten Oberwelle sowie z.T. auch der fünften Oberwelle aus den Ausgangssignalen eignen, werden nachfolgend anhand der Figuren 6a-6c beschrieben.

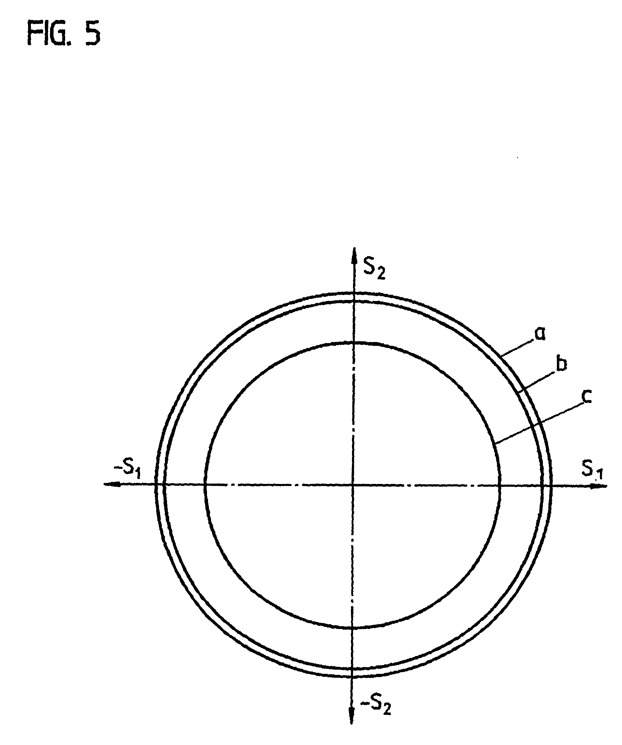

Aufgrund der erläuterten Maßnahmen in der erfindungsgemäßen Positionsmeßeinrichtung resultiert die gewünschte verbesserte Signalqualität der Ausgangssignale S₁, S₂. In Figur 5 ist hierzu der Signalverlauf für zwei um 90° phasenversetzte Ausgangssignale S₁, S₂ in der bekannten Lissajous-Darstellung gezeigt, die sich aufgrund der beschriebenen Ausgestaltung der erfindungsgemäßen Positionmeßeinrichtung in den verschiedenen Abtastabstands-Bereichen a - c aus den Figuren 4a und 4b ergibt. Deutlich erkennbar ist hierbei nunmehr zum einen, daß trotz der Aussteuerung im Bereich hoher Magnetfeldstärken, d.h. insbesondere im Bereich c keinerlei Signalverzerrung mehr auftritt, wie dies beispielsweise im Fall der Figur 2b zu beobachten war. Darüber hinaus ist erkennbar, daß bei den Abtastabständen a und c die Maximalamplituden der Signale sich lediglich um einen relativ geringen Betrag unterscheiden, d.h. es ist auch die geforderte, weitgehende Unabhängigkeit der Amplituden der Ausgangssignale S₁, S₂ vom Abtastabstand d gewährleistet.

Es ergeben sich demzufolge hinreichend optimierte Ausgangssignale S₁, S₂ innerhalb der erfindungsgemäßen Positionsmeßeinrichtung, die bei der Weiterverarbeitung in der Folgeelektronik oder Auswerteeinheit 4 zur Positionsbestimmung deutlich weniger Fehler liefern.

Eine Ansicht der Detektorebene der eingesetzten Abtasteinheit 5 aus dem Ausführungsbeispiel der Figur 1 ist in Figur 6a dargestellt. Weitere Möglichkeiten zur Anordnung der Abtastelemente, die gleichzeitig die gewünschte Filterwirkung gewährleisten sind in den Figuren 6b und 6c gezeigt. Die Figuren 6a - 6c geben dabei die Anordnung in der Detektorebene nicht maßstabsgetreu wieder, u.a. nicht die nachfolgend erläuterten Winkelverhältnisse.
In der Variante gemäß Figur 6a sind in der Detektorebene auf dem Trägerkörper 3 insgesamt vier Abtastelemente 2a - 2d in Form magnetoresistiver Elemente angeordnet. Die vier Abtastelemente 2a - 2d erstrecken sich dabei über eine Teilungsperiode TP der Maßstabteilung. Hierbei ist in der Detektorebene eine schräge Anordnung der vier Abtastelemente 2a - 2d unter einem bestimmten Winkel α gegenüber der Senkrechten auf die Meßrichtung x vorgesehen, wodurch die gewünschte Filterung der dritten Oberwelle bewirkt wird. Der entsprechende Winkel α ergibt sich dabei aus der Beziehung tan α = TP/3I, wobei l die Länge der Abtastelemente 2a - 2d darstellt und TP die vorab erläuterte Teilungsperiode der Maßstabteilung beschreibt. Im Fall einer Teilungsperiode TP der magnetischen Maßstabteilung und einer nicht-linearisierten Arbeitskennlinie gemäß Figur 4a sind die vier Streifen 2a - 2d innerhalb einer Teilungsperiode TP der magnetischen Maßstabteilung in äquidistanten Abständen angeordnet. Der Abstand der linken Kanten benachbarter Abtastelemente beträgt gemäß Figur 6a dabei jeweils TP/4. Die Teilungsperiode TP ist entsprechend der Figur 3 definiert. Neben der winkelmäßigen Ausrichtung der Abtastelemente 2a - 2d, die die gewünschte Filterung der dritten Oberwelle bewirkt, ist ferner eine Filterwirkung zu erzielen, indem die Breite b der trapezförmigen Abtastelemente 2a - 2d geeignet gewählt wird. So resultiert bei den gegebenen Verhältnissen mit einer Breite b=TP/5 auch eine Filterung der fünften Oberwelle aus den Ausgangssignalen S₁, S₂, die durch die geeignete Verschaltung der vier Abtastelemente 2a-2d in bekannter Art und Weise erzeugt werden. Selbstverständlich ist es möglich bzw. vorteilhaft, wenn in einer Abtasteinheit mehrere derart aufgebaute Vierer-Gruppen von Abtastelementen 2a - 2d in Meßrichtung x benachbart angeordnet und miteinander verschaltet werden.

Eine weitere Möglichkeit zur Ausgestaltung der Abtasteinheit, die die gewünschte Filterwirkung sicherstellt, zeigt Figur 6b. Hierbei sind ebenfalls wieder vier Abtastelemente 22a - 22d, ausgebildet als streifenförmige magnetoresistive Elemente, auf einem Trägerkörper 23 innerhalb einer Teilungsperiode TP angeordnet. Die magnetoresistiven Streifen sind nunmehr jedoch v-förmig in Meßrichtung x orientiert angeordnet. Der Abstand der linken Kanten benachbarter Abtastelemente beträgt wiederum TP/4. Erneut ist die Breite b der v-förmig ausgebildeten Abtastelemente 22a - 22d mit TP/5 so gewählt, daß neben der durch die schräge Anordnung bewirkten Filterung der dritten Oberwelle auch eine Filterung der fünften Oberwelle resultiert. Der Winkel α, der die Anordnung der magnetoresistiven Streifen gegenüber der Senkrechten zur Meßrichtung beschreibt, ergibt sich in dieser Ausführungsform aus der Beziehung tan α = TP/(3I/2).

Eine dritte Möglichkeit zur Ausgestaltung der Abtasteinheit bzw. Anordnung der magnetoresistiven Abtastelemente 32a - 32d ist in Figur 6c dargestellt. Die auf einem Trägerkörper 33 angeordneten magnetoresistiven Streifen 32a - 32d sind symmetrisch zu einer mittleren Achse ausgebildet, die parallel zur Meßrichtung x orientiert ist; ferner ist die Form der Streifen 32a - 32d sinusförmig gewählt. Wiederum sind innerhalb einer Teilungsperiode TP vier derartige Abtastelemente 32a - 32d angeordnet, deren linke Kanten jeweils den Abstand TP/4 zueinander aufweisen.

Neben den in den Figuren 6a - 6c erläuterten Varianten zur Filterung zumindest der dritten Oberwelle existieren weitere bekannte Möglichkeiten, die ebenfalls in der erfindungsgemäßen Positionsmeßeinrichtung eingesetzt werden können.

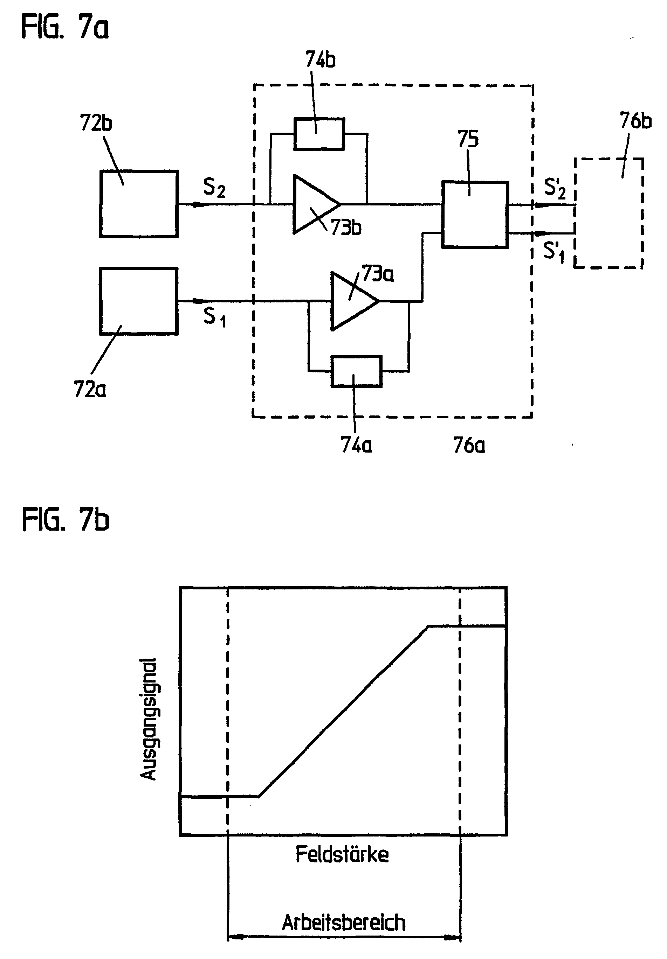

Eine weitere, zweite Ausführungsform der erfindungsgemäßen Positionsmeßeinrichtung ist in Figur 7a in einer schematisierten Blockschaltbild-Darstellung teilweise gezeigt, die wiederum als magnetische Positionsmeßeinrichtung ausgebildet ist. Nicht dargestellt ist hierbei die abgetastete magnetische Maßstabteilung. Im Unterschied zum ersten Ausführungsbeispiel ist nunmehr vorgesehen, magnetfeldempfindliche Abtastelemente 72a, 72b mit einer weitgehend linearen Arbeitskennlinie zu verwenden, beispielsweise Hall-Elemente. Die Arbeitskennlinie dieser Elemente 72a, 72b weist demzufolge einen Sättigungsbereich bei Magnetfeldstärken auf, die im Fall einer abgetasteten Maßstabteilung in der Regel nicht erreicht werden können. Die Abtastelemente 72a, 72b können demzufolge nicht im Sättigungsbereich betrieben bzw. ausgesteuert werden, wie dies im vorhergehenden Beispiel erfindungsgemäß vorgesehen wurde. Um die erläuterten, erfindungsgemäßen Prinzipien umzusetzen ist deshalb in dieser Ausführungsform einer magnetischen Positionsmeßeinrichtung vorgesehen, über Bauelemente 74a, 74b im Eingangsteil 76a der den Abtastelementen 72a, 72b nachgeordneten Folgeelektronik 76a, 76b einen Sättigungsbereich der Arbeitskennlinie künstlich zu erzeugen. Zu diesem Zweck werden in der dargestellten Ausführungsform den Verstärkern 73a, 73b im Eingangsteil 76a der Folgeelektronik jeweils nichtlineare Elemente 74a, 74b parallel zugeschaltet. Bei diesen nichtlinearen Elementen 73a, 73b kann es sich etwa um geeignete Widerstände, Dioden etc. handeln, die eine nichtlineare Verstärker-Arbeitskennlinie verursachen. Die auf diese Art und Weise modifizierte, trapezförmige Arbeitskennlinie der Verstärker 73a, 73b ist in Figur 7b dargestellt.
Die Aussteuerung einer derart modifizierten Verstärker-Arbeitskennlinie erfolgt dabei wiederum zwischen den künstlich erzeugten Sättigungsbereichen, d.h. der Abtastabstand ist wiederum so klein zu wählen, daß ein derartiger Arbeitsbereich über die gesamte Meßlänge eingehalten wird. Da in einer derartigen Ausführungsform keine Filterung der Oberwellenanteile auf Seiten der Abtastelemente 72a, 72b mit linearer Ausgangscharakteristik möglich ist, erfolgt die notwendige Filterung zumindest der dritten Oberwelle auf elektronischem Weg nach den Verstärkern 73a, 73b über eine schematisiert angedeutete Filtereinheit 75. Ausgangsseitig liegen nach einer derartigen Signalaufbereitung die optimierten Signale S₁', S₂' vor, die von dem nachgeordneten Teil 76b der Auswerteeinheit in bekannter Art und Weise zur Positionsbestimmung herangezogen werden können.

Hinsichtlich der Filterung der Signale in dieser Ausführungsform der erfindungsgemäßen Positionsmeßeinrichtung sei in diesem Zusammenhang desweiteren auf die EP 0106 951 B1 der Anmelderin verwiesen. Dort ist beispielsweise anhand der Ausführungsform in Figur 7 ein Verfahren erläutert, wie auf elektronischem Wege unerwünschte Oberwellenanteile aus einem periodischen Abtastsignal eliminiert werden können.
Es ist demzufolge auch erfindungsgemäß möglich, Abtastelemente mit weitestgehend linearer Ausgangscharakteristik ohne Sättigungsbereiche, beispielsweise Hall-Elemente, einzusetzen und trotzdem die gewünschte Signalqualität zu erhalten. Es resultieren somit eine Reihe von Möglichkeiten, die erfindungsgemäße Positionsmeßeinrichtung geeignet auszugestalten.

## Patentansprüche

1. Positionsmeßeinrichtung mit einer Maßstabteilung (1) und mindestens einem relativ dazu beweglichen Abtastelement (2a - 2d; 22a - 22d; 32a-32d), über das im Fall der Relativbewegung positionsabhängige, intensitätsmodulierte Ausgangssignale (S₁, S₂) erzeugbar sind, die einer nachgeordneten Folgeelektronik (4) zugeführt werden, wobei
- das mindestens eine Abtastelement (2a - 2d; 22a - 22d; 32a - 32d) eine Arbeitskennnlinie aufweist, welche beidseitig benachbart zu einem, zumindest teilweise annähernd linearen Arbeitsbereich jeweils Sättigungsbereiche aufweist, in denen sich auch bei einer Änderung des Eingangssignales kein wesentlich verändertes Ausgangssignal mehr ergibt und
- der Abtastabstand (d) zwischen der Maßstabteilung (1) und dem mindestens einem Abtastelement (2a - 2d; 22a - 22d; 32a - 32d) derart gewählt ist, daß über den gesamten Meßbereich eine Aussteuerung zwischen maximalen Eingangssignalen erfolgt, die in den Sättigungsbereichen der Arbeitskennlinie liegen und ferner
- das mindestens eine Abtastelement (2a - 2d; 22a - 22d; 32a - 32d) so ausgelegt ist, daß zumindest eine Filterung der dritten Oberwelle aus dem Ausgangssignal (S₁, S₂) gewährleistet ist.

2. Positionsmeßeinrichtung nach Anspruch 1, wobei das mindestens eine Abtastelement als magnetoresistives Element (2a - 2d; 22a - 22d; 32a-32d) ausgebildet ist, mit dem eine magnetische Maßstabteilung (1) abtastbar ist.

3. Positionsmeßeinrichtung nach Anspruch 2, wobei das mindestens eine magnetoresistive Element (2a-2d; 22a-22d; 32a-32d) im Bereich der abgetasteten Magnetfeldstärken der Maßstabteilung (1) eine im wesentlichen parabolische Arbeitskennlinie aufweist, bei welcher der annähernd lineare Arbeitsbereich zwei aneinanderanschließende Bereiche der Arbeitskennlinie mit entgegengesetzter Steigung umfasst.

4. Positionsmeßeinrichtung nach Anspruch 2, wobei das mindestens eine magnetoresistive Element im Bereich der abgetasteten Magnetfeldstärken der Maßstabteilung (1) eine im wesentlichen linearisierte Arbeitskennlinie aufweist.

5. Positionsmeßeinrichtung nach Anspruch 2, wobei mehrere streifenförmige magnetoresistive Elemente auf einem Trägerbauteil (3; 23; 33) äquidistant angeordnet sind.

6. Positionsmeßeinrichtung nach Anspruch 5, wobei die magnetoresistiven Elemente unter einem Winkel (α) zur abgetasteten Maßstabteilung (1) angeordnet sind, der von 90° abweicht, wodurch zumindest eine Filterung der dritten Oberwelle im Ausgangssignal (S₁, S₂) resultiert.

7. Positionsmeßeinrichtung nach Anspruch 6, wobei die Breite (b) der magnetoresistiven Elemente in Meßrichtung (x) so gewählt ist, daß zusätzlich mindestens eine Filterung der fünften Oberwelle im Ausgangssignal (S₁, S₂) resultiert.

8. Positionsmeßeinrichtung nach Anspruch 5, wobei die Länge der magnetoresistiven Elemente senkrecht zur Meßrichtung (x) in Abhängigkeit einer Sinus- oder Cosinus-Funktion gewählt ist.

9. Positionsmeßeinrichtung nach Anspruch 6, wobei sich der Winkel (α), unter dem die magnetroesistiven Elemente gegenüber einer Senkrechten zur Meßrichtung (x) angeordnet sind, aus der Beziehung tan α = TP/3l ergibt, mit TP als Teilungsperiode der magnetischen Maßstabteilung (1) und l als Länge der magnetoresistiven Elemente.

10. Positionsmeßeinrichtung mit einer Maßstabteilung (1) und mindestens einem relativ dazu beweglichen Abtastelement (72a, 72b), über das im Fall der Relativbewegung positionsabhängige, intensitätsmodulierte Ausgangssignale (S₁, S₂) erzeugbar sind, die einer nachgeordneten Folgeelektronik (76a, 76b) zugeführt werden, wobei
- mindestens ein Bauelement (73a, 73b, 74a, 74b) der Folgeelektronik (76a, 76b) derart ausgebildet ist, daß sich eine Arbeitskennlinie ergibt, welche beidseitig benachbart zu einem zumindest teilweise, annähernd linearen Arbeitsbereich jeweils Sättigungsbereiche aufweist, in denen auch bei einer Änderung des Eingangssignales kein wesentlich veränderte(s) Ausgangssignal (S₁, S₂) resultiert und
- der Abtastabstand (d) zwischen der Maßstabteilung (1) und dem mindestens einen Abtastelement (72a, 72b) derart gewählt ist, daß über den gesamten Meßbereich eine Aussteuerung zwischen maximalen Eingangssignalen erfolgt, die in den Sättigungsbereichen der Arbeitskennlinie liegen und ferner
- die Folgeelektronik (76a, 76b) so ausgelegt ist, daß zumindest eine Filterung der dritten Oberwelle aus den Ausgangssignalen (S₁, S₂) gewährleistet ist.

11. Positionsmeßeinrichtung nach Anspruch 10, wobei das mindestens eine Abtastelement (72a, 72b) als magnetfeldempfindliches Abtastelement in Form eines Hall-Elements mit einer weitgehend linearen Arbeitskennlinie ausgebildet ist.

12. Positionsmeßeinrichtung nach Anspruch 11, wobei in einer Eingangseinheit (76a) der Folgeelektronik (76a, 76b) mindestens einem Verstärker (73a, 73b) ein Bauelement (74a, 74b) mit einer nichlinearen Charakteristik parallel geschaltet ist, so daß eine Arbeits-Kennlinie des Verstärkers (73a, 73b) mit Sättigungsbereichen resultiert.

## Claims

1. Position measuring device having a scale division (1) and at least one scanning element (2a-2d; 22a-22d; 32a-32d) which can be moved relative thereto and via which, when there is relative movement, position-dependent, intensity-modulated output signals (S₁, S₂) can be generated which are supplied to a downstream evaluation unit (4), wherein
- the at least one scanning element (2a-2d; 22a-22d; 32a-32d) has a dynamic characteristic which has, adjoining both sides of an at least partially approximately linear operating area, saturation areas in which no significantly changed output signal results any more even when the input signal changes and
- the scanning gap (d) between the scale division (1) and the scanning element (2a-2d; 22a-22d; 32a-32d) is selected in such a way that over the entire measurement range, a modulation takes place between maximum input signals which are located in the saturation areas of the dynamic characteristic, and furthermore
- the at least one scanning element (2a-2d; 22a-22d; 32a-32d) is so designed that at least filtering of the third harmonic from the output signal (S₁, S₂) is guaranteed.

2. Position measuring device according to claim 1, wherein the at least one scanning element is configured as a magnetoresistive element (2a-2d; 22a-22d; 32a-32d), with which a magnetic scale division (1) can be scanned.

3. Position measuring device according to claim 2, wherein the at least one magnetoresistive element (2a-2d; 22a-22d; 32a-32d) has in the region of the scanned magnetic field strengths of the scale division (I) a substantially parabolic dynamic characteristic in which the approximately linear operating area has two regions of the dynamic characteristic which communicate with each other and have opposite incline.

4. Position measuring device according to claim 2, wherein the at least one magnetoresistive element has a substantially linearised dynamic characteristic in the region of the scanned magnetic field strengths of the scale division (1).

5. Position measuring device according to claim 2, wherein a plurality of strip-shaped magnetoresistive elements are arranged equidistant from one another on a carrier component (3; 23; 33).

6. Position measuring device according to claim 5, wherein the magnetoresistive elements are disposed with respect to the scanned scale division (1) at an angle (a) which is other than 90°, by which means at least filtering of the third harmonic in the output signal (S₁, S₂) results.

7. Position measuring device according to claim 6, wherein the width (b) of the magnetoresistive elements in the measuring direction (x) is so selected that, in addition, at least filtering of the fifth harmonic in the output signal (S₁, S₂) results.

8. Position measuring device according to claim 5, wherein the length of the magnetoresistive elements in a direction perpendicular to the measuring direction (x) is selected depending on a sine or cosine function.

9. Position measuring device according to claim 6, wherein the angle (a) at which the magnetoresistive elements are disposed in relation to a line perpendicular to the measuring direction (x) arises from the equation tan a = TP/31, where TP is the division period of the magnetic scale division (1) and 1 is the length of the magnetoresistive elements.

10. Position measuring device having a scale division (1) and at least one scanning element (72a, 72b) which can be moved relative thereto and via which, when there is relative movement, position-dependent, intensity-modulated output signals (S₁, S₂) can be generated which are supplied to a downstream evaluation unit (76a, 76b), wherein
- at least one component (73a, 73b, 74a, 74b) of the evaluation unit (76a, 76b) is configured in such a way that a dynamic characteristic is produced which has, adjoining both sides of an at least partially approximately linear operating area, saturation areas in which no significantly changed output signal (S₁, S₂) results even when the input signal changes and
- the scanning gap (d) between the scale division (1) and the at least one scanning element (72a, 72b) is selected in such a way that over the entire measurement range, a modulation takes place between maximum input signals which are located in the saturation areas of the dynamic characteristic, and furthermore
- the evaluation unit is so designed that at least filtering of the third harmonic from the output signal (S₁, S₂) is guaranteed.

11. Position measuring device according to claim 10, wherein the at least one scanning element (72a, 72b) is configured as a scanning element sensitive to a magnetic field, in the form of a Hall element with a largely linear dynamic characteristic.

12. Position measuring device according to claim 11, wherein in an input unit (76a) of the evaluation unit (76a, 76b), a component (74a, 74b) having a non-linear characteristic is connected in parallel with at least one amplifier (73a, 73b) so that a dynamic characteristic of the amplifier (73a, 73b) with saturation areas results.

## Revendications

1. Dispositif de mesure de position comprenant une graduation de règle de mesure (1) et au moins un élément d'exploration (2a-2d ; 22a-22d ; 32a-32d) qui est mobile par rapport à celle-ci et par lequel, en cas de mouvement relatif, peuvent être produits des signaux de sortie (S₁, S₂) modulés en intensité, qui sont dépendants de la position et qui sont amenés à un circuit électronique (4) monté en aval, dispositif dans lequel
- ledit au moins un élément d'exploration (2a-2d ; 22a-22d ; 32a-32d) présente une caractéristique de travail qui présente de façon voisine de part et d'autre d'une zone de travail au moins en partie sensiblement linéaire, des zones de saturation dans lesquelles ne se produit plus de variation sensible du signal de sortie même dans le cas d'une variation du signal d'entrée,
- l'intervalle d'exploration (d) entre la graduation de règle de mesure (1) et ledit au moins un élément d'exploration (2a-2d ; 22a-22d ; 32a-32d) est choisi de manière que sur toute la plage de mesure se produit une modulation entre des signaux d'entrée maximums qui sont situés dans les zones de saturation de la caractéristique de travail, et
- ledit au moins un élément d'exploration (2a-2d ; 22a-22d ; 32a-32d) est conçu de manière que soit assurée au moins un filtrage de la troisième harmonique dans le signal de sortie (S₁, S₂).

2. Dispositif de mesure de position suivant la revendication 1, dans lequel ledit au moins un élément d'exploration est réalisé sous forme l'élément magnétorésistif (2a-2d ; 22a-22d ; 32a-32d) pour l'exploration d'une graduation de règle de mesure (1) magnétique.

3. Dispositif de mesure de position suivant la revendication 2, dans lequel ledit au moins un élément magnétorésistif (2a-2d ; 22a-22d) présente dans la plage des intensités de champ magnétique explorées de la graduation de règle de mesure (1) une caractéristique de travail essentiellement parabolique sur laquelle la zone de travail sensiblement linéaire comprend deux zones successives de pentes opposées de la caractéristique de travail.

4. Dispositif de mesure de position suivant la revendication 2, dans lequel ledit au moins un élément magnétorésistif présente dans la zone des intensités de champ magnétique explorées de la graduation de règle de mesure (1) une caractéristique de travail essentiellement linéarisée.

5. Dispositif de mesure de position suivant la revendication 2, dans lequel plusieurs éléments magnétorésistifs en forme de ruban sont disposés de façon équidistante sur un composant de support (3 ; 23 ; 33).

6. Dispositif de mesure de position suivant la revendication 5, dans lequel les éléments magnétorésistifs sont disposés sous un angle (∝) différent de 90° par rapport à la graduation de règle de mesure (1) explorée, ce qui fait qu'il se produit au moins un filtrage de la troisième harmonique dans le signal de sortie (S₁, S₂).

7. Dispositif de mesure de position suivant la revendication 6, dans lequel la largeur (b) des éléments magnétorésistifs dans la direction de mesure (x) est choisie de manière qu'il se produise en plus au moins un filtrage de la cinquième harmonique dans le signal de sortie (S₁, S₂).

8. Dispositif de mesure de position suivant la revendication 5, dans lequel la longueur des éléments magnétorésistifs perpendiculairement à la direction de mesure (x) est choisie selon une fonction sinus ou cosinus.

9. Dispositif de mesure de position suivant la revendication 6, dans lequel l'angle (∝) sous lequel les éléments magnétorésistifs sont disposés par rapport à une normale à la direction de mesure (x) est défini par la relation tg ∝ = TP/3I, où TP désigne la période de la graduation de règle de mesure (1) et I la longueur des éléments magnétorésistifs.

10. Dispositif de mesure de position comprenant une graduation de règle de mesure (1) et au moins un élément d'exploration (72a, 72b) qui est mobile par rapport à celle-ci et par lequel, dans le cas de mouvement relatif, peuvent être produits des signaux de sortie (S₁, S₂) modulés en intensité, qui sont dépendants de la position et qui sont amenés à un circuit électronique (76a, 76b) monté en aval, dispositif dans lequel
- au moins un composant du circuit électronique (76a, 76b) est conçu de manière qu'il se produise une caractéristique de travail qui présente de façon voisine de part et d'autre d'une zone de travail au moins en partie sensiblement linéaire, des zones de saturation dans lesquelles ne se produit plus de variation sensible du signal de sortie (S₁, S₂) même dans le cas d'une variation du signal d'entrée,
- l'intervalle d'exploration (d) entre la graduation de règle de mesure (1) et ledit au moins un élément d'exploration (72a, 72b) est choisi de manière que sur toute la plage de mesure se produit une modulation entre des signaux d'entrée maximums qui sont situés dans les zones de saturation de la caractéristique de travail, et
- le circuit électronique (76a, 76b) est conçu de manière qu'il se produise au moins un filtrage de la troisième harmonique dans les signaux de sortie (S₁, S₂).

11. Dispositif de mesure de position suivant la revendication 10, dans lequel ledit au moins un élément d'exploration (72a, 72b) est réalisé en tant qu'élément sensible au champ magnétique sous la forme d'un élément à effet Hall avec une caractéristique de travail essentiellement linéaire.

12. Dispositif de mesure de position suivant la revendication 11, dans lequel, dans une unité d'entrée (76a) du circuit électronique (76a, 76b), un composant (74a, 74b) à caractéristique non linéaire est monté en parallèle au moins avec un amplificateur (73a, 73b), ce qui donne à l'amplificateur (73a, 73b) une caractéristique de travail avec des zones de saturation.
